# EUROPEAN PATENT APPLICATION

(11) **EP 2 103 583 A1**
(43) Date of publication of application: **23.09.2009**
(21) Application number: 08075206.6
(22) Date of filing: 20.03.2008
(51) Int. Cl.: C05F 17/00

(54) **Method and system for generation of energy from an aerobic composting process**

(71) Applicant: Bioclear B.V., 9727 DL Groningen (NL)
(72) Inventor: Hamelers, Hubertus Victor Marie, 6866 BX Heelsum (NL); Buisman, Cees Jan Nico, 8571 RH Harich (NL)
(74) Representative: Bruin, Cornelis Willem

(57) **Abstract**

The invention relates to a method, system and building with such a system for generating energy from an aerobic composting process. The method comprises the steps of:
- providing the composting process with biomass;
- determining the required amount of energy generation by the composting process; and
- controlling the composting process so that substantially the required amount of energy is generated.

## Description

The invention relates to a method for generating energy from an aerobic composting process wherein biomass is biologically oxidated.

Existing composting processes are directed to production of compost as the aerobically decomposed remnants of organic matter. This compost is used as soil conditioner and fertilizer. To prevent overheating air is supplied to the process to remove the heat generated by the composting process.

Known processes for generating energy from biomass burn the biomass, possibly together with other material. These processes generate energy in the form of heat that is conversed into electricity. One of the problems associated with these processes is the emission of e.g. nitrogen-dioxide.

The invention now has for its object to provide a method for generating energy from biomass that is more efficient and does not have the above drawbacks.

This objective is achieved with the method for generating energy from an aerobic composting process, comprising the steps of:
- providing the composting process with biomass;
- determining the required amount of energy generation by the composting process; and
- controlling the composting process so that substantially the required amount of energy is generated.

Generating energy from an aerobic composting process involves the biological oxidation of biomass or organic material. In this oxidation process heat is generated. The amount of heat that is generated depends on the composition of the biomass and is for example in the order of 15-20 MJ/kg of biomass. One of the advantages of biological oxidation as compared to burning of biomass is the prevention of emission of e.g. nitrogen-dioxide, and/or other Noₓ components. By determining the required amount of energy that has to be generated by the composting process, the desired rate of biological oxidation reactions(s) can be determined. This allows for the process to be controlled in such a way that substantially this required amount of energy is generated. Preferably the generated energy in the form of heat is used for heating e.g. a building. This heating can be performed either directly or indirectly through the use of a heat exchanger. This prevents undesired conversion of the generated heat into electricity in view of the conversion losses. The direct use of the energy generated by the process according to the invention increases the efficiency of the entire process. By controlling the rate of the composting process the desired, or required, amount of energy can be generated by the process. This prevents the generation of a surplus of energy that is either lost or requires conversion to enable storage. Existing processes aim at maximizing energy generation or maximizing the amount of compost as the desired output of the process. According to the present invention the amount of energy generated by the biological oxidation substantially matches the required or desired amount, thereby preventing storage and/or conversion means. This improves the efficiency of the entire process. The method according to the invention can e.g. be applied to the heating of stables or buildings, especially in rural areas not connected to the natural gas network, and schools and offices.

In a preferred embodiment according to the present invention the biomass comprises humid wood shreds.

Wood shreds or wood chips are commonly available from woods, parks, wooded banks, orchards, tree nurseries etcetera. This material is not commonly used as energy source. One of the advantages of using this material in the biological oxidation as biomass is its sustainability as it does not interfere with e.g. food production like other biomass materials. By composting the wood shreds instead of burning to generate energy there is no significant emission of SO₂, fine particles or particulates , CO, NOₓ and polycyclic Aromatic Hydrocarbons (PAHs). Additionally, biological oxidation of wood chips prevents the substantial emission of smells. Preferably the method according to the invention is applied decentrally. This prevents transport of wood chips over large distances, thereby contributing to pollution and decreasing efficiency. Decentral application therefore improves the efficiency of the process. Furthermore, by enabling use of the wood shreds in a rather efficient way the exploitation of e.g. wooded banks can be more efficient. This would improve the sustainability of communities, especially in rural areas. Furthermore, the use of wood chips in a method according to the present invention enables the return of valuable nutrients from especially relatively young wood material as fertilizer. These components would be lost in conventional wood burning processes.

In a preferred embodiment according to the present invention the determination of the required amount of energy generation by the composting process involves the use of energy consumption expectations by the user.

Controlling the composting process so that substantially the required amount of energy is generated enables efficient operation of the process without efficiency losses due to transportation of energy, conversion of energy, and/or storage of energy. By using the predicted levels of energy consumption by a user the biological oxidation process can be controlled more efficiently. E.g. energy consumption is often higher in the morning as people get up and get ready for work. Such consumption profiles can be incorporated in the control of the process, thereby time-optimizing the energy generation of the aerobic composting process.

In a preferred embodiment according to the present invention determining the required amount of energy generation by the composting process involves the use of weather forecasts.

Introducing weather forecasts in the control of the process allows for time-optimization of the process as e.g. energy consumption for heating can be predicted.

In a further preferred embodiment according to the present invention controlling the composting process involves manipulation of the composting process inputs, at least comprising the oxygen content of the incoming air flow, to generate substantially the required amount of energy.

Time-optimization of the biological oxidation process can be improved by manipulating the inputs to the composting process. The oxygen content of the incoming air flow has a large impact on the biological oxidation process. Oxygen concentrations below e.g. 5% significantly slows down the biological oxidation reaction(s). The amount of energy generated by the process can be varied by manipulating the oxygen content of the incoming air flow. Relevant ranges for manipulation of the Oxygen content are between 0-21%, preferably between 1 and 13%, and more preferably between 2 and 10%. The range between 0 and 21% includes the situation that no fresh air is introduced into the process. This range also includes the situation that only fresh air with environmental conditions is introduced. The range between 1 and 13% enables a more realistic control in situations arising in the method according to the invention. The smallest range between 2 and 10% enables the control of the process during at least most of the normal operating conditions. Preferably, also other inputs to the process are monitored and/or controlled. These inputs comprise conditions of the incoming air like temperature and moisture content. Other relevant inputs or parameters would be the oxygen distribution inside the composting reactor, the temperature distribution inside the reactor, and the amount of recirculation of air in the system. These parameters also influence the generation of energy from the aerobic composting process and may be relevant for the time-optimization of the process. Preferably, the optimization, that is performed real-time, aims not only at providing the required amount of energy at the appropriate time, it also includes cost efficiency. This may be achieved by manipulating the trajectory of the relevant parameters in the biological process to reach the desired amount at the desired time. In a preferred embodiment the incoming air flow for the composting process is controlled by control means. The control means enables pulse-wise control of at least the input of oxygen to the composting process. By applying these oxygen pulses to the system the rates of the biological oxidation reaction(s) can be manipulated. The control means can manipulate the length and/or the level of the pulses. Preferably, the control means use information about the distribution of conditions like temperature and oxygen inside the composting reactor. Preferably the determination of the required amount of energy generation is performed real-time enabling the on-line time-optimization of the composting process. This may improve e.g. the stand-alone capabilities of a system using the method according to the invention.

In a further preferred embodiment according to the present invention the generated energy is at least partly stored in the biomass of the composting process.

The biomass generates heat through the biological oxidation process mentioned above. Depending on e.g. the amount of air flow through the biomass and the rate of the biological oxidation reaction(s) the biomass is either heated or cooled. In fact, the biomass itself may act as a storage medium for the heat generated by the process. This increases flexibility of the process for time-optimization of the heat generation. Preferably, separate energy storage means are excluded in the system as this would require some sort of conversion and/or efficiency losses.

In a further preferred embodiment according to the present invention the biomass is oxidated for more than 70wt% of the original biomass.

In most composting operations the biomass is not fully oxidated. Mostly, a significant amount of biomass is not oxidated at all. By controlling the composting process, not only aiming at maximum output relating to energy or compost, the method according to the present invention enables the extreme biological oxidation of the biomass of up 70wt%. Preferably, the biomass is oxidated for more than 80wt%. This can be achieved by the improved control of the process e.g. controlling the oxygen content of the incoming air flow especially in a pulse-wise manner. This would increase efficiently of the process and result in less starting material for the composting process.

The invention further relates to a system for generating energy from an aerobic composting process, comprising:
- a composting reactor for composting biomass;
- calculation means for determining the required amount of energy;
- control means for controlling the composting process so that substantially the required amount of energy is generated. The invention also relates to a building provided with such a system. The system and building have similar effects and advantages as described above for the method.

The invention is further illustrated in the following description with reference to the annexed figures, which show:
figure 1A a system according to the invention;
figure 1B an alternative embodiment of the system according to the invention; and
figure 2 a schematic overview of the system according to figure 1B.

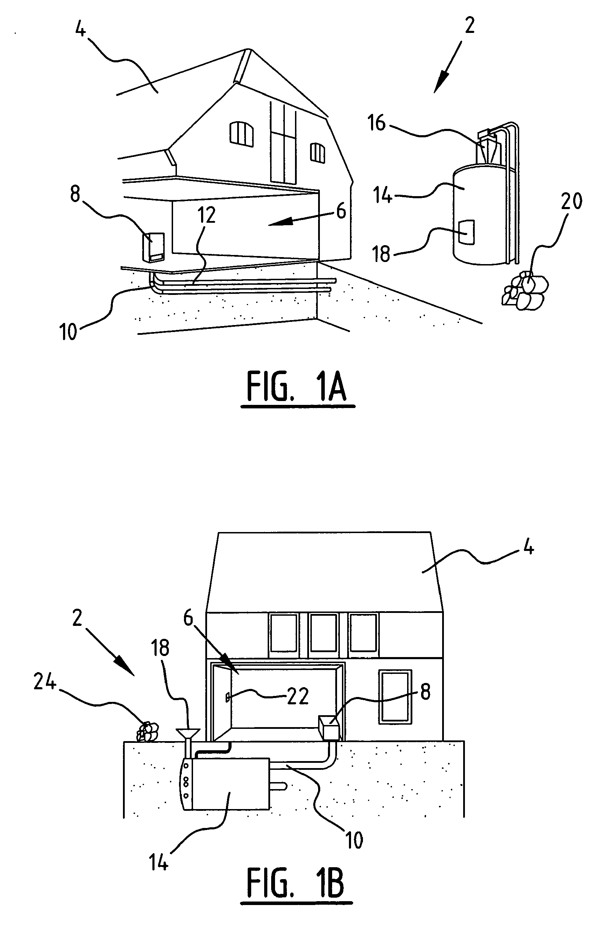

A system 2 (figure 1A) for the generation of energy from an aerobic composting process can be used for heating a house 4 with a living room 6 in which a heat source 8 is located for heating the room 6. Heat source 8 is supplied with hot air through pipeline 10. After exchanging the heat to the living room 6 the air is returned by pipeline 12 to the composting reactor 14. The transport of air is realized by blower 16. Biomass can be put into the reactor by the biomass input 18. Preferably the biomass originates from a biomass source 20 in the form of wood. In this embodiment the compost reactor 14 is put in the garden. This may be a relevant solution especially in rural areas.

In another embodiment of the system 2 according to the invention (figure 1B) the compost reactor is located in the ground, or alternatively in a cellar of a house 4. The user of system 2 can manipulate the system 2 using the thermostat 22 that is located in living room 6 of house 4. By manipulating the thermostat 22 the desired temperature settings can be set by the user. It is also possible to set user profiles in the thermostat thereby providing system 2 with data relevant for determining the amount of energy that should be generated by system 2. In the illustrated embodiment biomass 24 may be put into the reactor 14 via input channel 18.

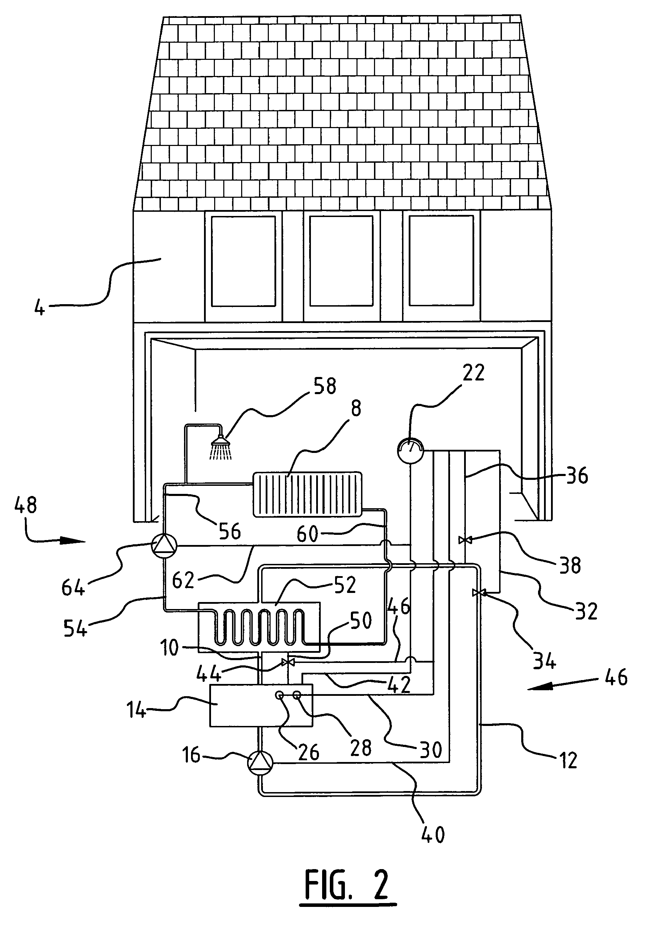

System 2 (figure 2) heats the radiator or heater 8 when required. To generate the required heat reactor 14 is operated and controlled by a process controller that may be incorporated in thermostat 22. The thermostat 22 is provided with measurement information from sensors 26 and 28 that are inputted in the control system via connection 30. This information may comprise measurements of actual content of O₂, CO₂, temperature, substrate, structure of the biomass, nutrient content and distribution of these parameters in the reactor. The air flow may be controlled by control signal 32 that manipulates valve 34. Valve 34 manipulates the amount of circulated air. Via control signal 36 the controller 22 may manipulate valve 38 and thereby the amount of fresh air intake. This enables the oxygen content. Blower 16 is controlled by control signal 40 from controller 22. Control parameters inside the reactor 14 are controlled by control signal 42. This may involve valves, sensors etcetera. The condensate that may result from the transfer of heat that is generated in the reactor 14 towards house 4 can be fed back to the reactor 14 by pipe 50. Pipe 50 can be opened or closed by valve 44 that is controlled by control signal 46 from the controller 22. The heat generated by reactor 14 is transferred to e.g. the living room of house 4 via heat exchanger 52. In the illustrated embodiment a first circuit 46 comprises pipes 10 and 12 for the circulation of air to and from reactor 14 with blower 16. In heat exchanger 52 the heat generated in reactor 14 is transferred to a second circuit 48. Heat exchanger 52 can be located inside or outside the biomass. With piping 54 fluid is circulated within circuit 48 via pipes 54,56 hot water supply in shower 58 and/or heating a room via heater 8, and pipe 60. Via control signal 62 controller 22 controls pump 64 for circulation of the fluid in the second circuit 48.

In system 2 the humid wood chips are biologically oxidated by micro-organisms like bacteria and fungi. This heat producing process typically operates at a temperature range of about 40-60 °C. Using a heat pump this temperature can be increased to a desired temperature of e.g. 70-80 °C. For a typical household using approximately 1800 m³ natural gas this would mean an energy consumption of 80 GJ. Assuming a Coefficient Of Performance (COP) for the heat pump of 5, relating to a relatively small temperature difference, the heat pump requires 16 GJ. For a requirement of 64 GJ about 3500 kg dry wood chips has to be fully composted. In case of a biological oxidation of 70wt% 5000 kg wood chips would be required. With a density of 600 kg/m³ this would mean that 8.3 m³ wood chips (dry matter) would be required for such a household each year.

It is thus the case that after examination of the foregoing many alternative and additional embodiments can occur to the skilled person which all lie within the scope of the invention defined in appended claims, unless there is a departure therein from the actual definitions or the spirit of the invention. Although in most relevant embodiments heat may be stored in the biomass directly without requiring separate storage means, in some practical situations it may be convenient to use separate storage means for storing and/or conversion of energy. Also it may be beneficial to combine the heat generation process according to the invention with other energy sources like solar and wind energy. This will improve the sustainability of e.g. a household. Preferably, the biomass consist entirely of humid wood chips. However, to improve the operation and/or for reasons of convenience, additional biomass may be mixed with the wood chips. Also, additional components improving the biological oxidation may be added to the reactor 14. Also, it may be possible to design the system using seasonal fluctuations e.g. by using the biomass available in the autumn for generating energy that may be required during the winter period.

## Claims

1. Method for generating energy from an aerobic composting process, comprising the steps of:
- providing the composting process with biomass;
- determining the required amount of energy generation by the composting process; and
- controlling the composting process so that substantially the required amount of energy is generated.

2. Method according to claim 1, wherein the biomass comprises humid wood shreds.

3. Method according to claim 1 or 2, wherein determining the required amount of energy generation by the composting process involves the use of energy consumption expectations by the user.

4. Method according to claim 1, 2 or 3, wherein determining the required amount of energy generation by the composting process involves the use of weather forecasts.

5. Method according to any of claims 1-4, wherein controlling the composting process involves manipulation of the composting process inputs, at least comprising the oxygen content of the incoming air flow, to generate substantially the required amount of energy.

6. Method according to any of claims 1-5, wherein the incoming air flow for the composting process is controlled by control means enabling pulse-wise control of at least the input of oxygen to the composting process.

7. Method according to any of claims 1-6, wherein the required amount of energy generation is determined real-time.

8. Method according to any of claims 1-7, wherein the generated energy is at least partly stored in the biomass of the composting process.

9. Method according to any of claims 1-8, wherein the biomass is oxidated for more than 70% of the original biomass by weight.

10. System for generating energy from an aerobic composting process, comprising:
- a composting reactor for composting biomass;
- calculation means for determining the required amount of energy;
- control means for controlling the composting process so that substantially the required amount of energy is generated.

11. Building provided with a system according to claim 10.
